Europäisches Patentamt

European Patent Office

Office européen des brevets

(11) Publication number: **0 385 694**
**A2**

# EUROPEAN PATENT APPLICATION

(21) Application number: 90302019.6

(22) Date of filing: 26.02.90

(51) Int. Cl.5: **H04L 27/18**

(30) Priority: 28.02.89 US 317155
28.02.89 US 317167
28.02.89 US 317211

(43) Date of publication of application:
05.09.90 Bulletin 90/36

(84) Designated Contracting States:
DE FR GB IT NL SE

(71) Applicant: FIRST PACIFIC NETWORKS, INC.
1170 Kifer Road
Sunnyvale, California 94086(US)

(72) Inventor: Long, James C.
825 Maria Lane
Sunnyvale, CA 94086(US)
Inventor: Serrone, Michael J.
886 Grape Avenue
Sunnyvale, CA 94087(US)

(74) Representative: Jones, Ian et al
POLLAK MERCER & TENCH High Holborn
House 52-54 High Holborn
London WC1V 6RY(GB)

(54) **Method and apparatus for demodulating M-ary phase shift keyed (PSK) signals.**

(57) A method and apparatus for preprocessing and demodulating M-ary PSK signals wherein the modulation is limited to phase transitions between adjacent phase transitions between adjacent phase states. The method of preprocessing comprises generating (112) harmonics of the modulated source signal prior to demodulation thereby to expand the phase differential between adjacent phase states, and then demodulating (116) one of selected harmonic signals as if it were a simple two or four phase PSK signal. The method of demodulating may be operative in a demodulator which comprises a phase splitter dividing a source signal into two or three paths with a preselected phase relationship among phases, one of the phases being delayed by nominally one bit period, one or two mixers or multipliers, each one of the mixers receiving as one input a representation of the delayed-phase component and as a second input a representation of one of the remaining phase components. The signals provided by the mixers are then combined in a predetermined manner, if necessary, then compared by at least one two-level comparator to provide a digital output. Digital logic circuitry responds to the digital outputs of each of the comparators to map the digital outputs into a single digital bit stream of ones and zeroes.

EP 0 385 694 A2

## METHOD AND APPARATUS FOR DEMODULATING M-ARY PHASE SHIFT KEYED (PSK) SIGNALS

This invention relates to digital signal processing, and more particularly, to a technique for demodulating a large class of digital phase modulated signals and to apparatus and methods for demodulating a large class of digital phase shift keyed modulated signals wherein phase change is limited to adjacent phase states.

Digital phase shift keyed signals (PSK signals) find wide application in communication. The signals are produced by discrete changes in phase of a periodic waveform. Phase is changed in accordance with a serial digital data stream acting as a control signal. The present invention has particular application to PSK signals wherein modulation is limited to phase transitions between adjacent phase states.

Prior art PSK modulation schemes have required demodulators whose complexity is proportional to the complexity of the modulated signal. For example, a binary PSK signal requires a relatively simple demodulator consisting of a single channel with a single multiplier used in connection with a local phase reference. A quadrature phase shift keyed (QPSK) signal on the other hand, as in the past required two phase references and two multipliers. As the number of phase states is increased, so also is the required number of phase references, multipliers and comparators in order to distinguish between the various phase states. Such circuitry is complex and potentially expensive, but in the past has been necessary to provide a sufficient margin in the signal-to-noise ratio. As the number of phases increases, so also does the complexity of the circuitry which is used to synchronize the locally-generated phase reference. The locally-generated reference takes a finite time to become synchronized, which causes the first portion of a message to not demodulate properly during burst node transmission. Such circuitry is complex and potentially expensive, but in the past has been necessary to provide a sufficient margin in the required signal-to-noise ratio for a given bit-error rate.

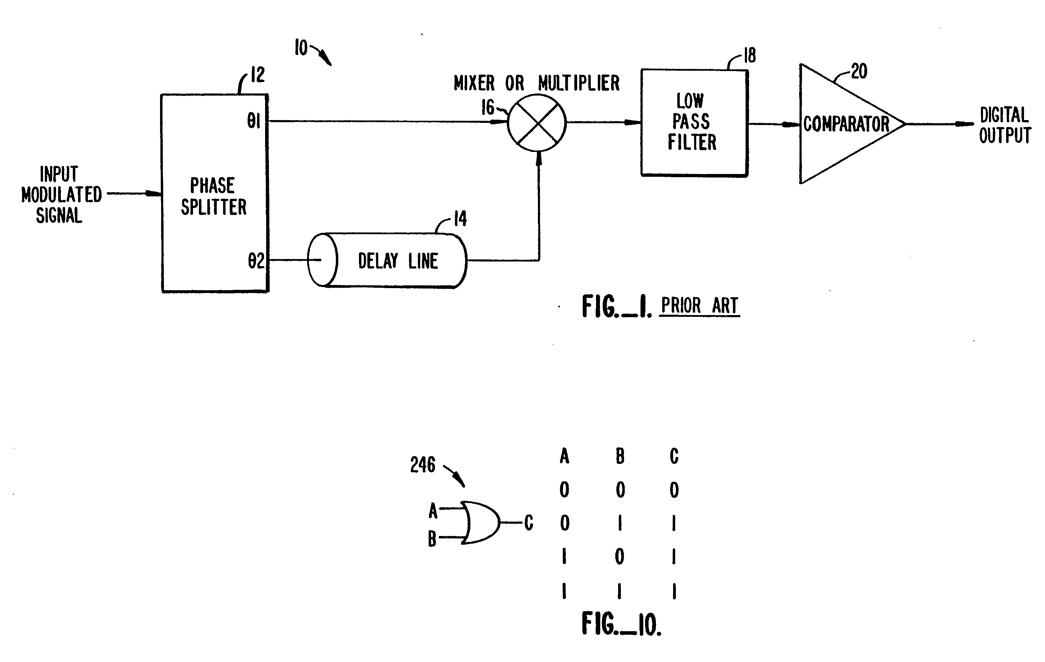

Referring now to the accompanying drawings, Figure 1 is a schematic block diagram showing a typical prior art bipolar phase shift keyed (BPSK) demodulator 10 suitable for demodulating burst mode BPSK transmissions. A demodulator 10 employs a phase splitter 12 providing as two outputs a first phase component $\theta_1$ and a second phase component $\theta_2$, wherein the second phase component is provided through a short delay line 14 (providing a nominal delay of one bit period), the output of the first phase component and the second phase component being mixed together in a mixer or multiplier 16 to produce a baseband bit stream to be directed through a lowpass filter 18. The output of the lowpass filter 18 is suitable for application to a two-level comparator 20, which is used to produce a stream of ones and zeroes as a digital output.

Quadrature phase shift keyed modulation has required more complex demodulators. An example is found in the textbook Digital Communications - Satellite/Earth Station Engineering, by Kamilo Feher, (Prentice-Hall, 1983), pp. 170-171. Therein is described a differential offset QPSK demodulator and a differential QPSK demodulator. In this demodulator, the in-phase (I) output and the quadrature-phase (Q) output are separately converted into digital levels before recombination into a serial data stream. The recombination requires a priori knowledge of the bit clock phase. This demodulator only works for QPSK signals. It is believed that there have never before been such simple demodulators for higher order M-ary PSK signals.

What is needed is a simple demodulator which can be used with M-ary PSK signals in situations where signal-to-noise ratio is not a primary consideration. What is also needed is a simple demodulator for QPSK which eliminates ambiguity of reinterleaving the signals and which can be used with M-ary PSK signals in situations where signal-to-noise ratio is not a primary consideration and which can also produce valid data with minimal delay from the start of transmission.

According to the invention, a method is provided for demodulating M-ary PSK signals wherein the modulation is limited to phase transitions between adjacent phase states which comprises generating harmonics of the modulated source signal prior to demodulation thereby to expand the phase differential between adjacent phase states, and then demodulating one of selected harmonic signals as if it were a simple two or four phase PSK signal. The resultant loss of margin in the signal-to-noise ratio is offset by corresponding simplification of the demodulation circuitry and cost savings. However, the spectral efficiency of a complex PSK signal is retained.

Expansion of phase differential is limited to a maximum differential of up to 180° to avoid ambiguities which would result from phase overlap.

According to the invention, a method and an apparatus are provided for demodulating M-ary PSK signals of the type wherein the modulation is limited to phase transitions between adjacent phase states. The method is operative in a demodulator which comprises a phase splitter dividing a source signal into

2

three paths with a preselected phase relationship among phases, one of the phases being delayed by nominally one bit period, a pair of mixers or multipliers, each one of the mixers receiving as one input a representation of the delayed-phase component and each one of the mixers receiving as a second input a representation of one of the other of the phase components. Mixed signals are provided by the mixers to a combiner which adds and subtracts the combined signals according to expected input signal type to produce from one to N intermediate output signals. An intermediate output signal is coupled to a corresponding two-level comparator, each of which receives and responds to the respective intermediate output signals to produce a digital output. Digital logic circuitry responds to the digital outputs of each of the comparators to map the digital outputs into a single digital bit stream of ones and zeroes. The resultant loss of margin and the signal-to-noise ratio is offset by corresponding simplification of the demodulation circuitry and cost savings. However, the spectral efficiency of a complex M-ary PSK signal is retained.

According to the invention, a method and an apparatus are provided for demodulating M-ary PSK signals of the type wherein the modulation is limited to phase transitions between adjacent phase states. The method is operative in a demodulator which comprises a phase splitter dividing a source signal into only two paths with a preselected phase relationship between phases, one of the phases being delayed by nominally one bit period, a single mixer or multiplier receiving as one input a representation of the delayed-phase component and receiving as a second input a representation of the other of the phase components. The output signal is coupled to at least one two-level comparator, each of which produces a digital output. Digital logic circuitry responds to the digital outputs of each of the comparators to map the digital outputs into a single digital bit stream of ones and zeros. The resultant loss of margin and the signal-to-noise ratio is offset by corresponding simplification of the demodulation circuitry and cost savings. However, the spectral efficiency of a complex M-ary PSK signal is retained.

The invention is further described below, by way of example, with reference to the remaining accompanying drawings, in which:

Figure 2 is a block diagram illustrating a method of converting M-phase modulated signal into M/N-phase modulated signals as a preprocessor for demodulating by an M/N-phase demodulator.

Figure 3 is a block diagram of a differential bipolar phase shift key (BPSK) signal demodulator which can be used in connection with the method of converting it in accordance with the invention.

Figure 4 is a schematic block diagram of a general M-ary PSK demodulator in accordance with the invention.

Figure 5 is a schematic block diagram of a portion of a first specific DOQPSK demodulator.

Figure 6 is a schematic block diagram of a portion of a second specific DOMPSK demodulator.

Figure 7 is a schematic block diagram of a general M-ary PSK demodulator in accordance with the invention.

Figure 8 is a schematic block diagram of a portion of a first specific DOQPSK demodulator.

Figure 9 is a schematic block diagram of a portion of a second specific DOMPSK demodulator.

Figure 10 is a schematic diagram of digital logic circuitry for decoding the outputs of comparators of the example of Figures 6 and 9.

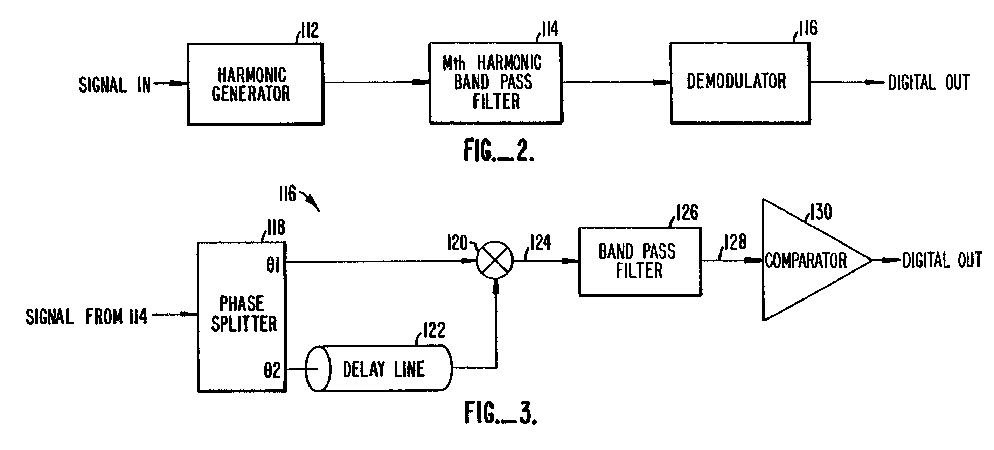

Referring to Fig. 2, there is shown a block diagram illustrating the method of converting a PSK signal in accordance with the invention. An input digitally modulated signal with differential phase changes of some fraction of $360°$ is applied to a harmonic generator 112. The harmonic generator 112 is for example, a multiplier which multiplies the input signal by itself for example, to obtain an output signal of double the frequency with phase components equal to twice the input phase such that there are half as many phase states. The harmonic generator 112 may multiply by 2, 3, 4 or N times the fundamental of the input signal with the limitation at the resultant expansion in phase difference between adjacent phase states is limited to the maximum differential of up to $180°$.

The output of the harmonic generator 112 is then applied to a bandpass filter 114 which in turn passes only the channel containing the Nth harmonic which is intended for processing. The Nth harmonic of the input digitally modulated signal has differential phase changes of N x $360°$ divided by M. All times the original phase differential. The resultant phase shift of the resulting signal will be that of a lower state modulation format such as, but not restricted to, N = 2, N = 4 or the like. This output signal is then fed to a demodulator 16 which is operative to demodulate the PSK signal in accordance with conventional and well understood principles.

Referring to Fig. 3, there is shown a suitable differential BPSK signal demodulator 116. Such a demodulator is primarily suited for demodulating bipolar (N = 2) PSK signals. The input modulated signal from the bandpass filter 114 (Fig. 2) is applied to a phase splitter 118 which separates the input signal into two paths having equal phase $\theta1$ and $\theta2$. The $\theta1$ phase signals apply directly to a mixer, which is for example, a multiplier 120. The second phase signal $\theta2$ is applied to a delay line 122 whose delay is

3

selected to be equal to the bit period of the data stream to be demodulated. The output of the delay line 122 is applied to a second input of the multiplier 120 to be mixed with the input of $\theta 1$. The resultant output signal is the sum and difference of the two phase signals. This sum and difference signal on output line 124 is applied to a lowpass filter 126. The lowpass filter 126 has a frequency character is intended to pass the difference signal only. The difference signal only on line 128 is applied to a comparator 130. The comparator 130 receives the analog input signal two levels and produces the desired two level digital output signal of a BPSK signal. It is understood by the processing circuitry that this BPSK signal is a representative of the input digital signal which is not in fact a BPSK signal.

It is understood that the input signal nevertheless is limited to the class of signals wherein modulation is limited to phase transitions between adjacent phase states.

Any suitable harmonic generator may be used. In addition to a multiplier, a non-linear element with appropriate filter could serve as a frequency multiplier, a full-wave rectifier could be employed to achieve a doubling of the resultant frequency, and any combination of the above techniques could be used for frequency harmonic generation. Another potential frequency harmonic generator is a phase lock loop with a divide by N frequency divider on the output of the voltage controlled oscillator whose output is then sent back to the phase detector. This latter method is particularly advantageous in that it ideally generates only a single harmonic of the desired frequency.

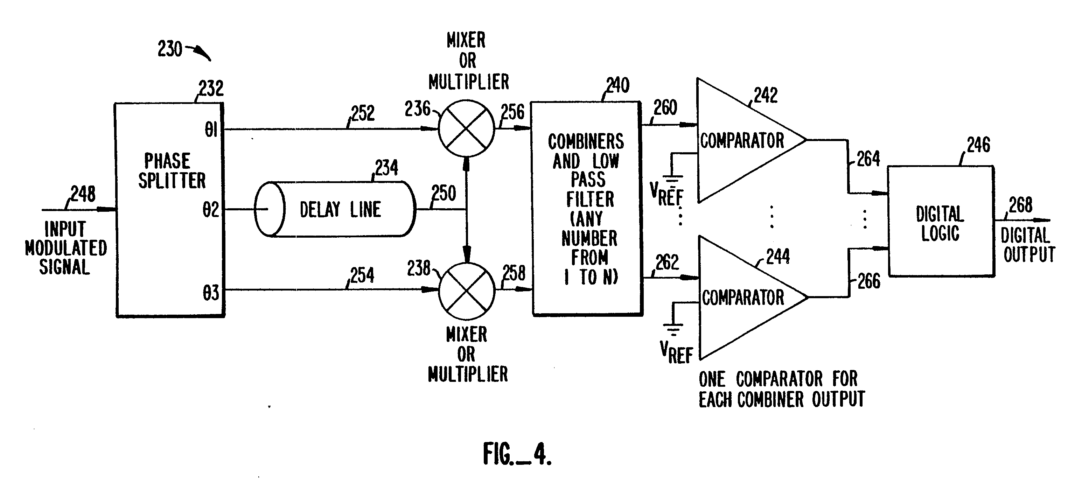

Referring to Figure 4, there is shown a specific embodiment of a demodulator 230. The demodulator 230 has a phase splitter 232 producing three outputs, a single delay line 234, a first mixer 236, a second mixer 238, and a combiner 240 in accordance with the invention. In addition, each specific embodiment of the invention has a selected number of combiner output channels whose signals may be analyzed in combination to extract a desired digital output. Specifically as shown in Figure 4, there is a first comparator 242, a second comparator 244 and digital logic circuitry 246, as hereinafter explained.

The phase splitter 232 has a single analog signal input 248 for receiving a modulated signal dividing a source signal into three paths with a preselected phase relationship among phases, one of the phases being delayed by nominally one bit period through the delay line 234 or its equivalent, such as a charge-coupled device (CCD). At this stage of the demodulator, the full spectrum of frequency components should be preserved such that the signal can be demodulated. The pair of mixers 236 and 238 may be multipliers, each one of the mixers 236 and 238 receiving on one input line 250 a representation of the delayed-phase component and each one of the mixers 236 and 238 also receiving on a second input line 252 and 254 a representation of one of the other of the phase components from the phase splitter 232. Examples of the phases out of the phase splitter 232 are $\theta_1$ is $0°$, $\theta_2$ is $45°$, and $\theta_3$ is $90°$. The delay of the delay line 234 is applied to the $45°$ phase line, and the nominal delay is one bit and the phase delay is a multiple of $360°$ at the carrier frequency of the input at input port 248.

Two combined signals on signal lines 256 and 258 are provided by the mixers 236 and 238 to the combiner 240. The combiner 240 is customized to the type of demodulation desired, as hereinafter explained. The combiner 240 adds or subtracts the signals with selected weighing according to expected input signal type to produce from one to N intermediate output signals on for example signal lines 260 and 262, for a two-output combination. The intermediate output signals from the combiner 240, which incorporates low-pass filters, are filtered to remove extraneous high-frequency components and then are respectively coupled on signal lines 260 and 262 to corresponding two-level comparators 242 and 244, each of which responds to produce a respective digital binary-level output on output lines 264 and 266 to digital logic circuitry 246. The digital logic circuitry 246 responds to the digital outputs of each of the comparators 242 and 244 to map the digital outputs into a single digital bit stream of ones and zeroes on output line 268.

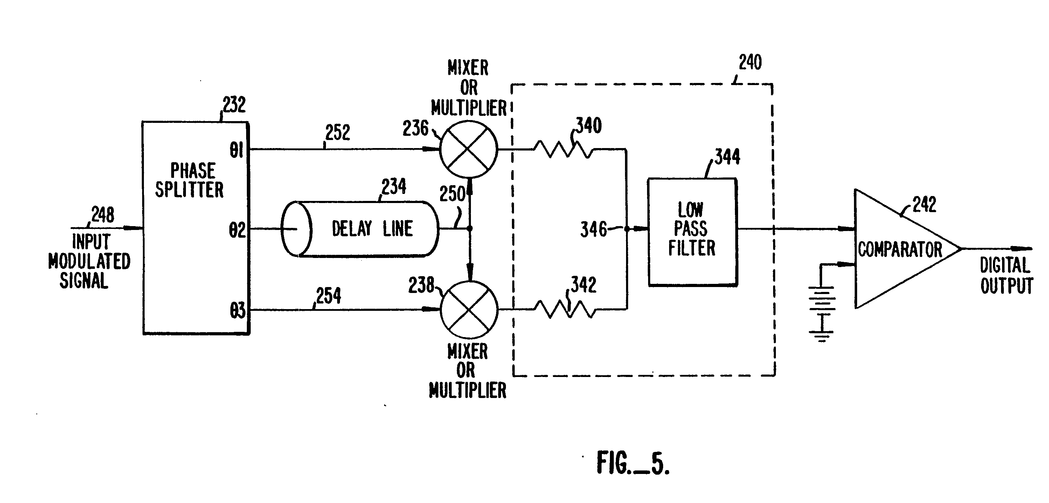

An example is useful for understanding the operation of the invention and the function of the components in the specific embodiment. Referring to Figure 5, a first example is Differential Offset Quadrature Phase Shift Keyed (DOQPSK) modulation wherein transitions are only between adjacent phase states. Consider an input signal having modulated phases shifted $+90°$, $0°$ and $-90°$ applied to phase splitter 32 through input port 248.

The phase splitter 232 produces fixed-phase-shifted outputs of $\theta_1 = +45°$, $\theta_2 = 0°$, and $\theta_3 = -45°$. (These phase relationships are essentially identical to those described above. The key is that there is a differential of $45°$ between the two inputs to each of the mixers 236 and 238.) The delay line 234 length is one bit with a $0°$ net phase shift (e.g., $720°$). An error of $+/-15\%$ on delay and net $+/-15°$ in phase is not critical and is therefore considered to be within the meaning of one bit delay with zero net phase shift.

The combiner 240 comprises a first resistor 340, a second resistor 342 and a lowpass filter 344. The first resistor 340 has one terminal coupled to the mixer 236 and the other terminal coupled to a mixing node 346. The second resistor 342 has one terminal coupled to the mixer 238 and the other terminal coupled to the mixing node 346. The mixing node 346 is coupled to the input of the lowpass filter 344. The combiner 240 thus is a device having the following transfer characteristics for unity voltage at the three phase outputs of the phase splitter 232:

| Phase change at input | Mixer One Voltage Out | Mixer Two Voltage Out | Combiner Volt. Out |
|---|---|---|---|
| a) $0°$ to $90°$ | -0.707 | +0.707 | 0.00 |
| b) $0°$ to $-90°$ | +0.707 | -0.707 | 0.00 |
| c) $0°$ to $0°$ | +0.707 | +0.707 | 1.414/2 |

Referring to Figure 5 showing a specific example, the output of the combiner 240 is applied to a single comparator 242, since further comparators are unnecessary in the case of DOQPSK. The logic level output of the comparator 242 in the above example thus for case a) is 0, for case b) is 0, and for case c) is 1.

From the above, it is seen that for the case of DOQPSK, the summing of outputs with equal weights and use of a comparator to hard limit the output at a decision level of 0.3535 Volt (1/2 of 0.707 Volt, the resultant high voltage output of the combiner), will result in the reconstruction of the original data. Digital logic circuitry 246 is unneeded to decode the output of a single comparator, such as the comparator 242. Hence the output of the comparator 242 is the desired digital data stream.

A single output of the combiner 240 can be coupled to the inputs of two standard dual-input comparators 242, 244 (shown in generalization in Figure 4). In such a configuration, more complex differential offset M-ary Phase Shift Keyed (DOMPSK) modulation can be analyzed with simple circuitry. An example follows:

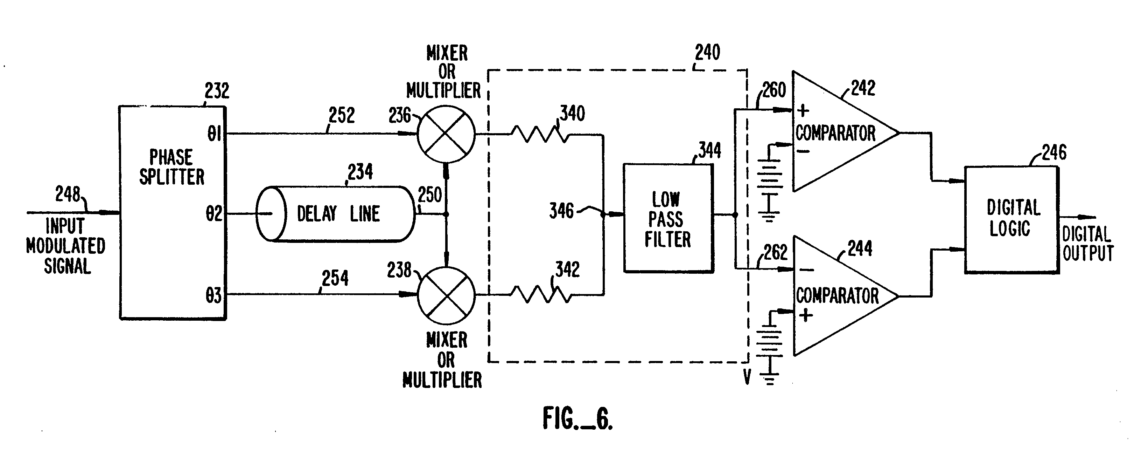

Referring to Figure 6, a second example is an Offset M-ary Phase Shift Keyed (OMPSK) modulation wherein transitions are only between adjacent phase states. Consider an input signal having modulated phases shifted $+\Delta°$, $0°$ and $-\Delta°$ applied to phase splitter 232 through input port 248. The following are the transfer characteristics for unity voltage at the output of the phase splitter where the differential phase shift is less than $180°$ but not exactly $90°$:

The phase splitter 232 produces fixed-phase-shifted outputs of $\theta_1 = +90° +\Delta°$, $\theta_2 = 0°$, and $\theta_3 = +90° -\Delta°$.

| Phase change at input | Mixer One Voltage Out | Mixer Two Voltage Out | Combiner Volt. Out |
|---|---|---|---|
| a) $0°$ to $+\Delta°$ | SIN $+2\Delta°$ | SIN $0°$ | (1/2)SIN $+2\Delta°$ |
| b) $0°$ to $-\Delta°$ | SIN $0°$ | SIN $-2\Delta°$ | (1/2)SIN $-2\Delta°$ |
| C) $0°$ to $0°$ | SIN $+\Delta°$ | SIN $-\Delta°$ | 0 |

The combiner 240 is identical to that of the combiner of Figure 5. Here, however, the single output of the combiner 240 is applied on lines 260 and 262 to a positive-referenced input of a first comparator 342 and a negative-reference input of a second comparator 344, respectively, each of which is independently referenced to different voltage references of equal magnitude but opposite polarities. The output of the comparators 342 and 344 in the above example thus depends on the magnitude of $\Delta$ to determine the binary logic levels for cases a), b), and c). The logic level output of the comparator 242 in the above example thus for case a) is 1, for case b) is 1, and for case c) is 0.

From the above, it is seen that for the case of OMPSK, the summing of outputs with equal weights and use of a comparator to hard limit the output at decision levels of (1/2) of (1/2)SIN($+2\Delta°$) Volt and (1/2) of (1/2)SIN($-2\Delta°$) Volt, the apparatus will reconstruct the original data if appropriate digital logic circuitry 246 is employed. Simple digital logic circuitry 246 is needed to decode the output of two comparators, such as the comparators 242 and 244.

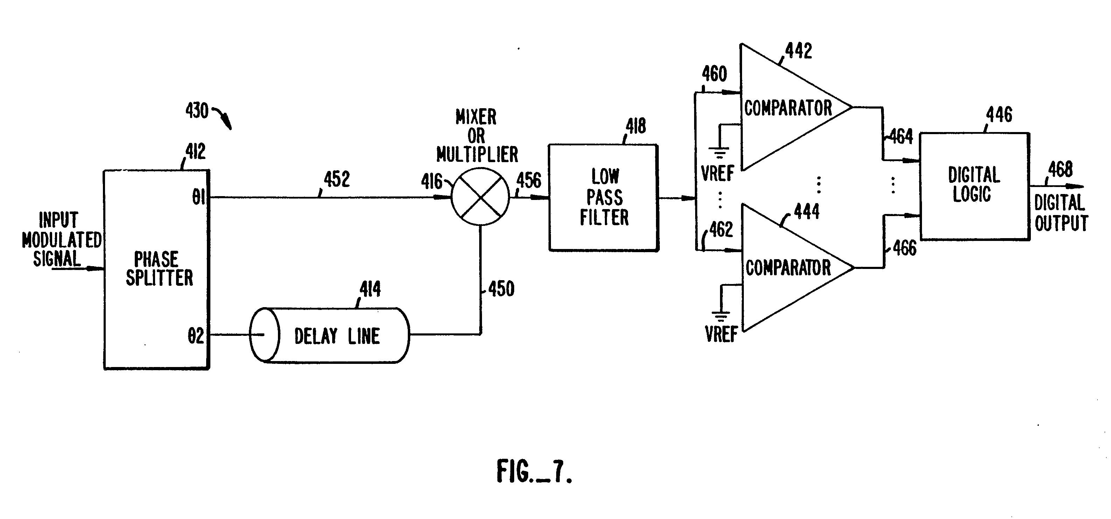

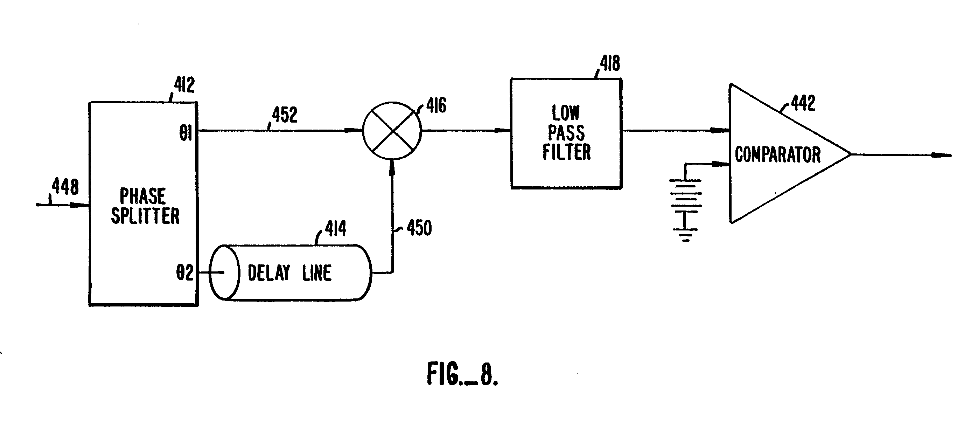

Referring to Figure 7, there is shown a specific embodiment of a demodulator 430 in accordance with the invention. The demodulator 430 has a phase splitter 412 producing two outputs, a single delay line 414, a single mixer 416, and a lowpass filter 418. In accordance with the invention, each specific embodiment of the invention has a selected number of output channels 460, 462 from the lowpass filter 418 whose signals are coupled to two-level comparators. Specifically as shown in Figure 8, there is a first comparator 442, a second comparator 444 and digital logic circuitry 446, as hereinafter explained.

The phase splitter 412 has a single analog signal input 448 for receiving a modulated signal dividing a source signal into only two paths with a preselected phase relationship between the two phases, usually in quadrature relationship, one of the phases being delayed by nominally one bit period through the delay line 414 or its equivalent, such as a charge-coupled device (CCD). At this stage of the demodulator 430, the full spectrum of frequency components should be preserved such that the signal can be demodulated. The mixer 416 may be a multiplier receiving on one input line 450 a representation of the delayed-phase component and on a second input line 452 a representation of the other of the phase components from the phase splitter 412. The delay of the delay line 414 is applied to the $90^\circ$ phase line, and the nominal delay is one bit and the phase delay is a multiple of $360^\circ$ at the carrier frequency of the input at input port 448.

A mixed signal on signal line 456 is provided by the mixer 416 to a lowpass filter 418, whereby the combined signal is filtered to remove extraneous high-frequency components. The filtered signal is then coupled on signal lines 460 and 462 to corresponding two-level comparators 442 and 444, each of which responds to produce a respective digital binary-level output on output lines 464 and 466 to digital logic circuitry 446. The digital logic circuitry 446 responds to the digital outputs of each of the comparators 442 and 444 to map the digital outputs into a single digital bit stream of ones and zeroes on output line 468. This demodulator works with the special case of M-ary PSK where the phase transitions are limited to adjacent phase states. The circuit herein is a general case with a minimum number of circuit elements and required phase components.

An example is useful for understanding the operation of the invention and the function of the components in the specific embodiment. Referring to Figure 8, a first example is Differential Offset Quadrature Phase Shift Keyed (DOQPSK) modulation wherein transitions are only between adjacent phase states. Consider an input signal having modulated phases shifted $+90^\circ$, $0^\circ$ and $-90^\circ$ applied to dual phase-phase phase splitter 412 through input port 448.

The phase splitter 412 produces fixed-phase-shifted outputs of $\theta_1 = +0^\circ$ and $\theta_2 = -0^\circ$. The delay line 414 length is one bit with a $0^\circ$ net phase shift (e.g., $720^\circ$). An error of $+/-15\%$ on delay and net $+/-15^\circ$ in phase is not critical and is therefore considered to be within the meaning of one bit delay with zero net phase shift. The following is the transfer characteristic for unity voltage at the two phase outputs of the phase splitter 412:

| Phase change at input 448 | Mixer 416 Voltage Out | Logic Level Out |
|---|---|---|
| a) $0^\circ$ to $90^\circ$ | 0.0 | 0 |
| b) $0^\circ$ to $-90^\circ$ | 0.0 | 0 |
| c) $0^\circ$ to $0^\circ$ | 1.0 | 1 |

Referring to Figure 8 showing a specific example, the output of the lowpass filter 418 is applied directly to a single comparator 442, since further comparators are unnecessary in the case of DOQPSK. The logic level output of the comparator 442 in the above example is shown in the right-hand column of the above table. From the above, it is seen that for the case of DOQPSK, the use of a comparator to hard limit the output at a decision level of 0.5 Volt will reconstruct the original data. Digital logic circuitry 446 is unneeded to decode the output of a single comparator, such as the comparator 442. Hence, the output of the comparator 442 is the desired digital data stream.

A single output of the lowpass filter 418 can be coupled to the inputs of two standard dual-input comparators 442, 444 (shown in generalization in Figure 7). In such a configuration, more complex differential offset M-ary Phase Shift Keyed (DOMPSK) modulation can be analyzed with simple circuitry. An example follows:

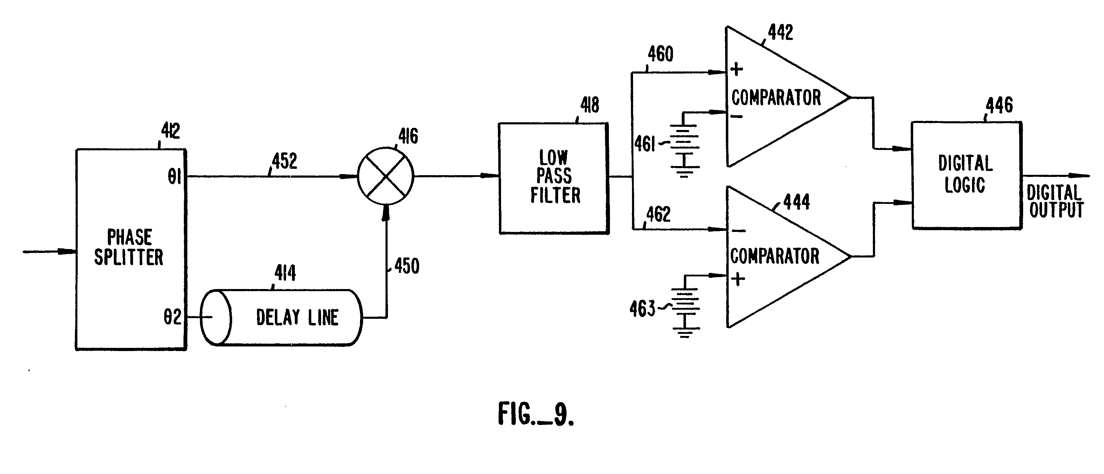

Referring to Figure 9, a second example is an Offset M-ary Phase Shift Keyed (OMPSK) modulation wherein transitions are only between adjacent phase states. Consider an input signal having modulated phases shifted $+\Delta^\circ$, $0^\circ$ and $-\Delta^\circ$ applied to the phase splitter 412 through input port 448. The following are the transfer characteristics for unity voltage at the output of the phase splitter where the differential phase shift is less than $180.^\circ$ but not exactly $90^\circ$:

The phase splitter 412 produces fixed-phase-shifted outputs of $\theta_1 = +90^\circ$ and $\theta_2 = 0^\circ$.

| Phase change at input 48 | Mixer 16 Voltage Out | Mixer 16 V Out($\Delta=45^\circ$) | Logic Level Out($\Delta=45^\circ$) |
|---|---|---|---|
| a) $0^\circ$ to $+\Delta^\circ$ | COS $90+\Delta^\circ$ | COS $135^\circ$ | 1 |
| b) $0^\circ$ to $-\Delta^\circ$ | COS $90-\Delta^\circ$ | COS $45^\circ$ | 1 |
| c) $0^\circ$ to $0^\circ$ | COS $90^\circ = 0$ | COS $90^\circ$ | 0 |

The single output of the lowpass filter 418 is applied on lines 460 and 462 to a positive-referenced input of a first comparator 442 and a negative-reference input of a second comparator 444, respectively, each of which is independently referenced to different voltage references 461, 463 of equal magnitude but opposite polarities. The output of the comparators 442 and 444 in the above example thus depends on the magnitude of $\Delta$ to determine the binary logic levels for cases a), b), and c). A specific example is shown above. The logic level outputs of each of the comparators 442 and 444 and the final logic level output in the above example is given by the following table:

| Case | Comparator 442 | Comparator 444 | Logic Out |
|---|---|---|---|
| a) | 1 | 0 | 1 |
| b) | 0 | 1 | 1 |
| c) | 0 | 0 | 0 |

From the above, it is seen that for the case of OMPSK, the summing of outputs with equal weights and use of a comparator to hard limit the output at decision levels of $(1/2)COS(+90+\Delta^\circ)$ Volt and $(1/2)COS(90-\Delta^\circ)$ Volt, the apparatus will reconstruct the original data if appropriate digital logic circuitry 446 is employed. Simple digital logic circuitry 446 is needed to decode the output of two comparators, such as the comparators 442 and 444.

Referring to Figure 10, there is shown one suitable circuit for digital logic circuitry 246 and 446 in accordance with the invention. The digital logic circuitry 246 and 446 are merely two-input OR gates. In a more general case, the digital logic circuits 246 and 446 would be of a design to provide decoding of signals from a plurality of comparators into a single digital data bit stream. In such a configuration, more complex differential and nondifferential offset M-ary Phase Shift Keyed modulation can be demodulated with simple circuitry.

The invention has now been described with reference to specific embodiments. Other embodiments will be apparent to those of ordinary skill in the art. For example, the method according to the invention can be practiced in a special case wherein phase changes are limited to a plurality of selected phase states between $+90^\circ$ and $-90^\circ$ relative to an initial phase state. In such special cases, comparing comprises identifying each phase state by means of a group of comparators 242, 244 (Figure 4) or 442, 444 (Figure 8), the number of individual comparators 442, 444 being one less than the number of possible phase states. It is therefore not intended that this invention be limited, except as indicated in the appended claims.

## Claims

1. An apparatus (230,430) for demodulating an M-ary phase shift keyed (MPSK) signal (248) wherein modulation is constrained to phase transitions between adjacent phase states, the apparatus comprising:

means (112) for generating a harmonic representation of the MPSK signal to obtain an Nth harmonic MPSK signal with expanded differential between adjacent phase states;

means (114) for selecting the Nth harmonic MPSK signal for demodulation;

phase splitter means (232;412) for dividing a source signal into at least two paths with a preselected phase relationship among at least a first phase component and a second phase component;

delay means (234;414) coupled to receive as an output the second phase component from said phase splitter (232;412), said second phase component being delayed by nominally one bit period at an output of the delay means (234;414) as a delayed-phase component;

at least one mixer (236,238;416) coupled to receive as one input a representation of the delayed-phase component and a second input a representation of another phase component to produce at least one mixed signal; and

at least one two-level comparator means (242;442,444), the or each of the two-level comparator means being coupled to receive the weighted mixed signals to produce a digital output signal.

2. An apparatus (230) for demodulating an M-ary phase shift keyed modulated signal (248) wherein modulation is constrained to phase transitions between adjacent phase states, the apparatus comprising:

a phase splitter means (232) for dividing a source signal into three paths with a preselected phase relationship among a first phase component, a second phase component and a third phase component;

a delay means (234) coupled to receive as an output said second phase component from said phase splitter (232), said second phase component being delayed by nominally one bit period at an output of said delay means (234) as a delayed-phase component, said delayed phase component have a phase between said first phase component and said third phase component;

a first mixer (236);

a second mixer (238);

each one of said first mixer (236) and said second mixer (238) coupled to receive as one input a representation of the delayed-phase component and said first mixer (236) coupled to receive as a second input a representation of said first phase component to produce a first mixed signal, and said second mixer (238) coupled to receive as a second input a representation of said third phase component to produce a second mixed signal;

means (240) coupled to receive said first mixed signal and said second mixed signal for combining said first mixed signal and said second mixed signal to produce a weighted mixed signal according to expected input signal type; and

at least one two-level comparator means (242), the or each of the two-level comparator means being coupled to receive the weighted mixed signal to produce a digital output signal.

3. An apparatus (430) for demodulating an M-ary phase shift keyed modulated signal (448) wherein modulation is constrained to phase transitions between adjacent phase states, said apparatus comprising:

a phase splitter means (412) for dividing a source signal into two paths with a preselected phase relationship among first phase component and a second phase component;

a delay means (414) coupled to receive as an output said second phase component from said phase splitter (412), said second phase component being delayed by nominally one bit period at an output of said delay means (414) as a delayed-phase component;

a mixer (416) coupled to receive as one input a representation of the delayed-phase component and a second input a representation of said first phase component to produce a mixed signal;

low-pass filter means (418) coupled to receive said mixed signal for producing a filtered signal;

at least one two-level comparator means (442,444), each one of said two-level comparator means (442,444) being coupled to receive said filtered signal to produce a digital output signal.

4. An apparatus as claimed in claim 2 or 3 wherein a plurality of two-level comparator means (242,244;442,444) are provided for identifying different signal levels of the weighted mixed signal, and wherein digital logic circuit means (246;446) are coupled to receive outputs of the two-level comparator means (242,244;442,444) in order to combine the outputs of the two-level comparator means (242,244;442,444) to produce the digital output signal.

5. An apparatus as claimed in claim 4 wherein exactly two two-level comparator means (242,244;442,444) are provided, and wherein the digital logic circuit means comprises a two-input OR gate (246;446).

6. A method of demodulating an M-ary phase shift keyed (MPSK) signal wherein modulation is constrained to phase transitions between adjacent phase states, the method comprising the steps of:

generating (112) a harmonic representation of the MPSK signal to obtain an Nth harmonic MPSK signal with expanded differential between adjacent phase states;

selecting (114) the Nth harmonic MPSK signal for demodulation; and

demodulating (116) the Nth harmonic MPSK signal as a phase shift keyed (PSK) signal of lower value M.

7. A method as claimed in claim 6 wherein the harmonic generating step (112) generates the Nth MPSK signal having a differential between adjacent phases not exceeding 180°.

8. A method as claimed in claim 7 wherein the harmonic generating step (112) comprises multiplying the MPSK signal by itself.

9. A method as claimed in claim 6, 7 or 8 wherein the selecting step (114) comprises filtering the Nth harmonic in a passband.

10. A method as claimed in claim 6, 7, 8 or 9 wherein the demodulating step (116) comprises applying bipolar phase shift keyed demodulation to said Nth harmonic MPSK signal, wherein the Nth harmonic MPSK signal has exactly two phase states.

11. A method of demodulating an M-ary phase shift keyed (MPSK) signal wherein modulation is constrained to phase transitions between adjacent phase states, the method comprising the steps of:

dividing a source signal (248) into three paths (250,252,254) with a preselected phase relationship among a first phase component ($\theta1$), a second phase component ($\theta2$) and a third phase component ($\theta3$);

delaying said second phase component ($\theta2$) by nominally one bit period, said delayed phases component ($\theta2$) having a phase difference relative to both said first phase component ($\theta1$) and said third phase component ($\theta3$), to produce a delayed-phase component (250);

mixing a representation of the delayed-phase component (250) and said first phase component ($\theta1$) to produce a first mixed signal (256);

mixing a representation of the delayed-phase component (250) and said third phase component ($\theta3$) to produce a second mixed signal (258);

combining said first mixed signal (256) and said second mixed signal (258) to produce a weighted mixed signal (260,262) according to expected input signal type; and

comparing said weighted mixed signal (260,262) against preselected decision thresholds in at least one comparator (242) means to produce a digital output signal (264).

12. A method of demodulating an M-ary phase shift keyed (MPSK) signal wherein modulation is constrained to phase transitions between adjacent phase states, the method comprising the steps of:

dividing a source signal (448) into two paths (452,45) with a preselected phase relationship among a first phase component ($\theta1$) and a second phase component ($\theta2$);

delaying said second phase component ($\theta2$) by nominally one bit period to produce a delayed-phase component;

mixing a representation of the delayed-phase component and said first phase component ($\theta1$) to produce a mixed signal (456);

low-pass filtering said mixed signal (456) to produce a filtered signal (460,462); and

comparing said filtered signal (460,462) against preselected decision thresholds in at least one comparator means (442,444) to produce a digital output signal (464,466).

13. A method as claimed in claim 11 or 12 wherein a plurality of two-level comparator means (242,244;442,444) are provided, and including the steps of:

identifying different signal levels of the weighted mixed signal (260,262;460,462); and

analyzing the different signal levels of the two-level comparator means (242,244;442,444) in order to combine the outputs of the two-level comparator means (242,244;442,444) to produce the digital output signal (264;464).

14. A method as claimed in claim 13 wherein exactly two two-level comparator means (242,244;442,444) are provided, and wherein the digital logic circuit means comprises a two-input OR gate (246;446).

15. A method as claimed in claim 11 or 12 wherein phase changes are limited to selected phase states between +90° and -90° relative to an initial phase state, and wherein the comparing step comprises identifying each phase state by means of an individual comparator (242,244;442,444), the number of the individual comparators being one less than the number of possible phase states.

INPUT MODULATED SIGNAL → PHASE SPLITTER (12) θ1, θ2

10

DELAY LINE (14)

MIXER OR MULTIPLIER 16

LOW PASS FILTER (18)

COMPARATOR (20) → DIGITAL OUTPUT

**FIG._I.** PRIOR ART

246

A
B
— C

| A | B | C |
|---|---|---|
| 0 | 0 | 0 |
| 0 | 1 | 1 |
| 1 | 0 | 1 |
| 1 | 1 | 1 |

**FIG._10.**

EP 0 385 694 A2

EP 0 385 694 A2

SIGNAL IN → **HARMONIC GENERATOR** /112 → **Mth HARMONIC BAND PASS FILTER** /114 → **DEMODULATOR** /116 → DIGITAL OUT

**FIG._2.**

116

SIGNAL FROM 114 → **PHASE SPLITTER** /118

θ1 → 120 → /124 → **BAND PASS FILTER** /126 → 128 → **COMPARATOR** /130 → DIGITAL OUT

θ2 → **DELAY LINE** /122 →

**FIG._3.**

FIG._4.

230

PHASE SPLITTER 232

248 INPUT MODULATED SIGNAL

θI

θ2

θ3

DELAY LINE 234

252

250

254

236 MIXER OR MULTIPLIER

238 MIXER OR MULTIPLIER

256

258

COMBINERS AND LOW PASS FILTER (ANY NUMBER FROM I TO N) 240

260

262

COMPARATOR 242

V_REF

COMPARATOR 244

V_REF

ONE COMPARATOR FOR EACH COMBINER OUTPUT

264

266

DIGITAL LOGIC 246

268 DIGITAL OUTPUT

EP 0 385 694 A2

FIG._5.

EP 0 385 694 A2

INPUT MODULATED SIGNAL 248

PHASE SPLITTER 232
θ1
θ2
θ3

DELAY LINE 234
250

252
254

236 MIXER OR MULTIPLIER
238 MIXER OR MULTIPLIER

240

340
342
346

LOW PASS FILTER 344

V

260
262

242 COMPARATOR +  −
244 COMPARATOR −  +

246 DIGITAL LOGIC

DIGITAL OUTPUT

FIG._6.

FIG._7.

EP 0 385 694 A2

FIG._8.

EP 0 385 694 A2

FIG._9.

EP 0 385 694 A2